# EUROPEAN PATENT SPECIFICATION

(11) **EP 3 294 669 B1**
(45) Date of publication and mention of the grant of the patent: **02.01.2019**
(21) Application number: 16722596.0
(22) Date of filing: 04.05.2016
(51) Int. Cl.: C01B 3/36, C01B 3/38

(54) **PROCESS FOR PREPARING A SYNGAS AND SYNGAS COOLING DEVICE**
VERFAHREN ZUR HERSTELLUNG EINES SYNGASES UND SYNGASKÜHLVORRICHTUNG
PROCÉDÉ ET DISPOSITIF DE REFROIDISSEMENT DE GAZ DE SYNTHÈSE

(30) Priority: 14.05.2015 EP 15167763
(43) Date of publication of application: 21.03.2018
(73) Proprietor: Shell Internationale Research Maatschappij B.V., 2596 HR The Hague (NL)
(72) Inventor: SCHMITZ-GOEB, Manfred, Heinrich, 51643 Gummersbach (DE); SMIT, Ruben, 1031HW Amsterdam (NL)
(74) Representative: Shell Legal Services IP
(86) International application number: PCT/EP2016/059994
(87) International publication number: WO 2016/180701

(56) References cited:
- EP-A1- 0 600 621
- EP-A2- 1 094 030
- WO-A1-2007/131975
- WO-A1-2010/133621
- US-A1- 2008 141 951

## Description

### Field of the invention

The invention relates to a process for the preparation of a syngas comprising hydrogen and carbon monoxide from a preheated methane comprising gas and to a cooling device for cooling hot raw syngas.

### Background of the invention

The expression "syngas" as used herein refers to synthesis gas, which is a common term to refer to gas mixtures comprising carbon monoxide and hydrogen.

Processes for the preparation of syngas from a methane comprising feed gas are well known. Typically such process comprises reacting the methane comprising gas with an oxidising gas, generally oxygen or an oxygen-containing gas such as air. The methane reacts with the oxygen to form carbon monoxide and hydrogen. This partial oxidation reaction is highly exothermic and the raw syngas formed accordingly has a high temperature and needs to be cooled before it can be further processed.

Devices for cooling hot syngas are also well known in the art and widely used in industry. Such devices typically comprise a vessel with heat exchange tubes arranged therein around which the cooling medium -typically water- can flow to absorb the heat from the hot syngas. Accordingly, when in operation water is present in and flows through the vessel around the heat exchange tubes. The outer walls of these heat exchange tubes are in direct contact with the water. The hot syngas is then typically passed through the heat exchange tubes, so that the tube walls absorb the heat from the hot syngas and release this heat to the water. In order to find an optimum balance between size of the vessel and heat exchange surface provided by the outer walls of the heat exchange tubes, heat exchange tubes are often helically coiled. For example, in a boiler the water used to absorb the heat from the hot syngas is used to generate saturated steam or even superheated steam.

A cooling device in which superheated steam is prepared is described in WO-A-2007/131975. This cooling device comprises spirally ascending conduits comprising an evaporating section located in a water bath space in the lower end of a vertically oriented vessel and a superheater section located in the upper end of the same vessel. The conduit of the superheater section is surrounded by a second conduit, thus forming an annular space between said superheater conduit and said second conduit. This annular space has an inlet and an outlet. When in operation, the hot syngas flows through the spirally ascending conduit, generating saturated steam in the evaporation section. This saturated steam is allowed to flow to the upper end of the vessel where it is passed into the inlet of the aforesaid annular space in the superheater section. The -still hot-syngas flowing through the conduits of the superheater section transfers its heat to the saturated steam flowing through the annular space, thereby generating superheated steam. Saturated steam and hot syngas can flow either co-currently or counter-currently in the superheater section. According to WO-A-2007/131975 the cooled syngas leaving the cooling device may have a temperature of up to 600 °C, but suitably has a temperature of between 200 and 450 °C.

When using syngas as the hot gas, the temperature of the cooled syngas leaving the cooling device should preferably not exceed 450 °C because of the corrosive nature of raw syngas to metals at elevated temperatures and the high pressure of the hot syngas in the cooling device (typically between 3 and 7 MPa). Higher temperatures may pose a serious corrosion risk to transfer lines for transferring the pressurized syngas from the cooling device to a further device for cooling or treating the syngas.

The cooled syngas leaving the cooling device as described in WO-A-2007/131975 and suitably having a temperature of up to 450 °C still contains recoverable heat. This heat could, for example, be used to preheat the natural gas feed to any partial oxidation reaction. However, the maximum attainable temperature of the natural gas when preheated via indirect heat exchange against such cooled raw syngas would be limited to about 400 °C. Hence, additional preheating of the natural gas feed or supply of additional oxygen to the partial oxidation reactor would be required to effectively perform the partial oxidation reaction. However, supplying additional oxygen would result in the formation of more carbon dioxide and hence syngas of poorer quality, whilst additional preheating requires more energy input from external sources.

The present invention aims to provide a process wherein heat contained in the hot raw syngas can be more effectively recovered and wherein the natural gas feed can be effectively preheated to temperatures higher than 400 °C using such heat.

### Summary of the invention

The present invention relates to a process for the preparation of a syngas, wherein a preheated methane comprising feed gas is reacted with an oxidising gas and wherein the hot raw syngas thus obtained is cooled in a cooling process which is carried out in a single cooling device and comprises at least indirect heat exchange against water to produce saturated steam and indirect heat exchange against a methane comprising gas to obtain the preheated methane comprising feed gas from which the hot raw syngas is prepared. In this way the heat contained in the hot raw syngas produced is used to effectively preheat the methane comprising feed to a temperature between 400 and 650 °C. The term "indirect heat exchange" as used herein generally refers to heat exchange between two mediums by heat transfer from one medium to the other medium through a means separating both mediums (e.g. a wall) which means is capable of transferring the heat from one medium to the other.

The present invention also relates to a cooling device for cooling a hot raw syngas comprising an evaporation section for indirect heat exchange of the hot raw syngas against water and a gas heat exchange section for indirect heat exchange of the hot raw syngas against a cooling gas.

An important advantage of the present invention is that the methane comprising feed for the reaction with an oxidising gas to produce the raw syngas can be effectively preheated to temperatures up to 650 °C, while at the same producing saturated steam. A further advantage is that the process and device of the present invention can be further expanded to include a superheating section to produce superheated steam or a further evaporation section to produce more saturated steam. With the process and device according to the present invention the heat generated in the reaction between the methane comprising feed and oxidising gas is very effectively recovered.

### Detailed description of the Invention

Accordingly, the present invention relates to a process for the preparation of a syngas comprising hydrogen and carbon monoxide comprising the steps of:
(a) reacting a preheated methane comprising gas with an oxidising gas to obtain a hot raw syngas comprising carbon monoxide and hydrogen;
(b) cooling the hot raw syngas resulting from step (a) to obtain the syngas by indirect heat exchange against water to produce saturated steam;
(c) further cooling the raw syngas obtained in step (b) by indirect heat exchange against a methane comprising gas to obtain a cooled raw syngas and the preheated methane comprising gas for use in step (a),
wherein:
(i) steps (b) and (c) take place in a single cooling device for combined indirect heat exchange against water and against the methane comprising gas; and
(ii) the preheated methane comprising gas obtained in step (c) has a temperature between 400 and 650 °C.

In step (a) of the present process a methane comprising gas is reacted with an oxidising gas to obtain a hot raw syngas. This can, for example, suitably be attained by means of partial oxidation (POX) or autothermal reforming (ATR) of a methane comprising feed.

Examples of suitable methane comprising feeds include (coal bed) methane, natural gas, associated gas, refinery gas or a mixture of C1-C4 hydrocarbons. The methane comprising feed suitably comprises more than 90 v/v%, especially more than 94%, C1-C4 hydrocarbons and at least 60 v/v% methane, preferably at least 75 v/v%, more preferably at least 90 v/v%. Most preferably natural gas or associated gas is used.

The oxidising gas used may be oxygen or an oxygen-containing gas. Suitable gases include air (containing about 21 percent of oxygen) and oxygen enriched air, which may contain at least 60 volume percent oxygen, more suitably at least 80 volume percent and even at least 98 volume percent of oxygen. Such pure oxygen is preferably obtained in a cryogenic air separation process or by so-called ion transport membrane processes. The oxidising gas may also be steam or carbon dioxide.

The POX process can take place in the presence of a suitable reforming catalyst or in the absence of a catalyst. The POX reaction is highly exothermic and hence results in a hot raw syngas. Publications describing examples of POX processes are EP-A-291111, WO-A-97/22547, WO-A-96/39354 and WO-A-96/03345.

The POX process is typically carried out in a partial oxidation reactor. This can be a catalytic or non-catalytic POX process. When carried out in the absence of a catalyst such partial oxidation reactor typically comprises a burner placed at the top in a reactor vessel with a refractory lining. The reactants are introduced at the top of the reactor. In the reactor a flame from the burner is maintained in which the methane comprising feed gas reacts with the oxygen or oxygen-containing gas to form a syngas. Reactors for catalytic POX processes usually comprise a burner at the top and one or more fixed beds of suitable catalyst to react the methane in the feed with the oxygen added to the top of the reactor to form a syngas.

ATR processes are well known. In such ATR process the methane comprising gas reacts with the oxidising gas to produce syngas. The ATR process takes place in an autothermal reformer which typically comprises a burner, a combustion chamber and a catalyst bed in a refractory lined pressure vessel. The burner is placed at the top of the pressure vessel and extends into the combustion chamber which is located in the top section of the pressure vessel. The catalyst bed is arranged below the combustion chamber. Examples of ATR processes and autothermal reformers are e.g. disclosed in WO-A-2004/041716, EP-A-1403216 and US-A-2007/0004809.

Suitable reforming catalysts and arrangements for such catalysts which can be used in the autothermal reformer, are known in the art. Such catalysts typically comprise a catalytically active metal, suitably nickel, on a refractory oxide support such as ceramic pellets. Pellets, rings or other shapes of refractory oxide materials like zirconia, alumina or titania could also be used as support material. Further examples of suitable reforming catalysts are disclosed in US-A-2004/0181313 and US-A-2007/0004809.

For the purpose of the present invention step (a) may be a POX process (preferably a non-catalytic POX process) or an ATR process, as both processes will allow for maximum heat recovery and optimum preheating of the methane comprising feed in steps (b) and (c). Non-catalytic POX processes are well known. The raw synthesis gas produced in such process typically has a temperature of between 1100 and 1500 °C, suitably between 1200 and 1400 °C. The pressure at which the syngas product is obtained may be between 3 and 10 MPa and suitably between 5 and 7 MPa. In an ATR process the raw syngas leaving the autothermal reformer typically has a temperature in the range of from 950 to 1200°C , more suitably 970 to 1100°C. Operating pressures in an autothermal reformer are typically between 2 and 6 MPa, more suitably between 2 and 5 MPa. These temperatures and pressures of the raw syngas formed will also be the temperatures and pressures at which the raw syngas enters the cooling device in step (b). In addition to the oxygen-containing gas, steam may also be added.

In step (b) the hot raw syngas produced in step (a) is first cooled by indirect heat exchange against water to produce saturated steam followed by further cooling against a methane comprising gas in step (c) to obtain the cooled hot raw syngas. According to the present invention these steps take place in a single cooling device. It was found that this is essential for optimum heat recovery from the hot raw syngas so as to effectively preheat the methane comprising gas to temperatures as high as between 400 and 650 °C whilst at the same time effectively cool the hot raw syngas to a temperature between 200 and 450 °C. The indirect heat exchange against water in step (b) is suitably carried out by passing the hot gas through a (coiled) tube immersed in water, thereby producing saturated steam. The saturated steam resulting from step (b) has a temperature between 150 and 350 °C, more suitably between 220 and 310 °C.

The temperature of the raw syngas after step (b) should be sufficiently high to preheat the methane comprising gas in step (c) to the desired temperature between 400 and 650 °C. Preferred target temperature of the methane comprising gas obtained in step (c) is between 450 and 600 °C. The indirect heat exchange against water in step (b) will, therefore, be designed such that the temperature of the raw syngas after cooling step (b) will be sufficiently high to preheat the methane comprising gas in step (c) to the desired temperature between 400 and 650 °C, preferably between 450 and 600 °C.

In step (c) the cooled hot raw syngas resulting from step (b) is further cooled by indirect heat exchange against a methane comprising gas in the same cooling device. The methane comprising gas is the same methane comprising gas which, after preheating in step (c), will be used as the preheated methane comprising feed in step (a) of the present process. The indirect heat exchange process step (c) is designed such that effective heat transfer takes place from the hot raw syngas to the methane comprising gas. Such single-phase heat exchange can be attained by means known in the art provided it can be combined with the two-phase heat exchange taking place in step (b).

The two-phase heat exchange step (b) and the single-phase heat exchange step (c) take place in a single cooling device. This cooling device should accordingly comprise at least one two-phase heat exchange section and at least one single-phase heat exchange section which are separated to ensure the cooling mediums water and methane comprising gas remain effectively separated and cannot get mixed, while at the same time the hot raw syngas can flow through both sections to be cooled by indirect heat exchange against both cooling mediums. A fire tube heat exchanger design with the hot raw syngas on the tube side with appropriate separation between both sections can suitably be used for both sections.

The cooled raw syngas leaving the single cooling device has a temperature of between 200 and 600 °C, preferably between 250 and 450 °C and hence still contains recoverable heat. Such recoverable heat can, for instance, be used to preheat the methane comprising feed before it enters step (c). Accordingly, in a preferred embodiment of the present invention the methane comprising gas used as cooling medium and preheated in step (c) is first preheated to a temperature of up to 400 °C by indirect heat exchange against the cooled raw syngas that leaves the single cooling device to obtain a further cooled raw syngas. The temperature of such further cooled syngas will depend on the temperature of the cooled syngas leaving the single cooling device and the supply temperature of the methane comprising gas and will typically be between 150 and 350 °C, more suitably between 200 and 300 °C.

Such further cooled syngas may still contain recoverable heat which can, for instance, be used to preheat the water used as the cooling medium in step (b) to further optimize the heat integration. Hence, in a preferred embodiment the water used in step (b) is first preheated by indirect heat exchange against the further cooled raw syngas. The syngas resulting from this heat recovery step will typically have a temperature below 200 °C, suitably between 100 and 180 °C.

In one embodiment of the present invention the cooled raw syngas which leaves the single cooling device may suitably be the cooled raw syngas resulting from step (c). However, the cooled raw syngas resulting from step (c) may also first be subjected to one or more further heat recovery steps before it leaves the single cooling device in which steps (b) and (c) take place. Accordingly, in another embodiment of the present invention step (c) is followed by a step (d) as follows: (d) further cooling the cooled raw syngas obtained in step (c) by indirect heat exchange against water in the single cooling device to obtain further saturated steam and further cooled raw syngas. Step (d) takes place in the same single cooling device in which Steps (b) and (c) take place. In this embodiment the cooled raw syngas resulting from step (c) is suitably passed back in step (d) to the section in the cooling device where the indirect heat exchange against water takes place to produce further saturated steam before it leaves the single cooling device.

In yet another embodiment the saturated steam obtained in step (b) (and step (d), if present) is superheated by indirect heat exchange against the cooled raw syngas obtained in step (c) in a superheater section contained in the single cooling device to obtain superheated steam and the cooled raw syngas leaving the single cooling device. Accordingly, in this embodiment step (c) is followed by a step (d') as follows:
(d') further cooling the cooled raw syngas obtained in step (c) by indirect heat exchange against the saturated steam obtained in step (b) in the single cooling device to obtain superheated steam and further cooled syngas. A suitable superheater section that can be included in the single cooling device is, for example, described in WO-A-2007/131975. Such superheater section will typically be included in the top part of the single cooling device or be integrated with the single-phase heat exchange section where step (c) takes place.

The present invention also relates to a cooling device for cooling a hot raw syngas which can be used in the process of the present invention as described above. Accordingly, the present invention relates to a cooling device for cooling a hot raw syngas by indirect heat exchange against water in an evaporation section I and against a cooling gas in gas heat exchange section II, which device comprises a vertically oriented vessel 1 comprising at least one spirally ascending conduit 2, an inlet 4 for the hot gas fluidly connected to the upstream end of the conduit 2 for upward passage of the hot raw syngas through the spirally ascending conduit 2, an outlet 5 for cooled raw syngas fluidly connected to the downstream end of the conduit 2, an inlet 6 for fresh water and an outlet 7 for dry steam, a water bath space 8 in the lower part of the vessel 1, a saturated steam collection space 9 above said water bath space 8 and a dry steam collection space 23 above said saturated steam collection space 9 in the upper part of vessel 1, wherein
(i) the evaporation section I is located in the lower part of vessel 1 and the gas heat exchange section II is located immediately above the evaporation section I in vessel 1,
(ii) said spirally ascending conduit 2 comprises an evaporating section 10 located in the water bath space 8 in evaporation section I and a preheating section 11 located in gas heat exchange section II,
(iii) the conduit 2 of the preheating section 11 is surrounded by a second conduit 12 forming an annular space 13 between said conduit 2 and said second conduit 12,
(iv) the annular space 13 is provided with an inlet 14 for cooling gas fluidly connected to an inlet 15 for cooling gas and an outlet 16 for heated cooling gas located at the opposite end of said annular space 13 which outlet 16 is fluidly connected to outlet 17 for the heated cooling gas,
(v) the inlet 14 and/or outlet 16 is located in water bath space 8 below the water level 21, and
(vi) a separation means 25 is arranged inside vessel 1 between steam collection space 9 and dry steam collection space 23.

The one or more spirally ascending conduits 2 in pressure vessel 1 may be spirally ascending around the vertical axis 3 of pressure vessel 1, but could also be arranged in different bundles of spirally ascending conduits 2, which bundles are arranged around the central axis 3 of pressure vessel 1. Both configurations could be applied in the cooling device of the present invention. In a preferred embodiment, however, the conduits 2 are spirally ascending around the vertical axis 3 of the pressure vessel 1 and the drawings illustrating the invention will show this preferred embodiment.

The cooling device of the present invention will be further described with reference to the drawings.

### Brief description of the drawings

Figure 1 shows a schematic drawing of a cooling device according to the present invention suitable for operation of the indirect heat exchange of raw syngas against the methane comprising gas in co-current mode.
Figure 2 shows a schematic drawing of a cooling device according to the present invention suitable for operation of the indirect heat exchange of raw syngas against the methane comprising gas in counter-current mode.
Figure 3 shows a schematic drawing of the upper part of a cooling device according to the present invention with a superheater section positioned above gas heat exchange section II.

### Detailed description of the drawings

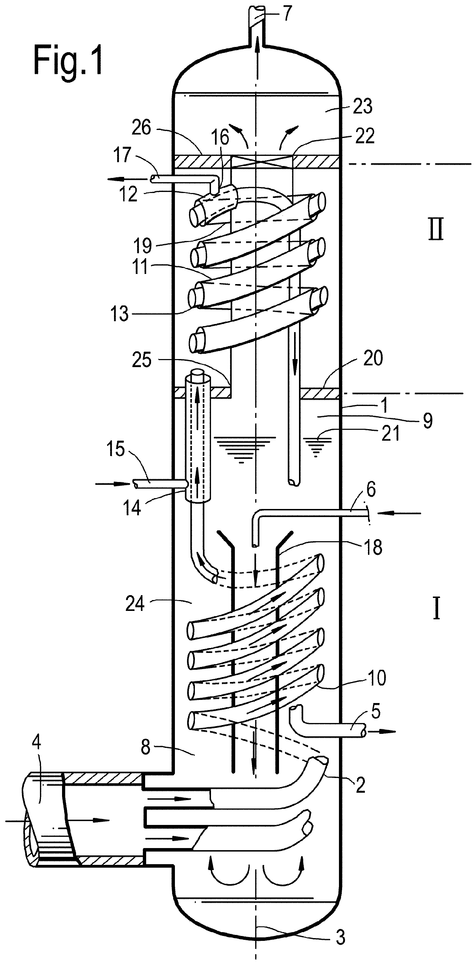

In Figure 1 vertically oriented pressure vessel 1 is divided into an evaporation section I, a gas heat exchange section II located immediately above evaporation section I and a dry steam collection space 23 in the top part of vessel 1. This vessel should be capable of withstanding high pressures of up to 14 MPa and is therefore also referred to as pressure vessel. The pressure vessel 1 comprises conduits 2 which spirally ascend around the vertical axis 3 and are fluidly connected to inlet 4 for the hot raw syngas and outlet 5 for the cooled raw syngas. The outlet 5 as shown in Figure 1 is positioned in evaporation section I, but may obviously also be positioned in the gas heat exchange section II. The conduits 2 comprise an evaporating section 10 located in the water bath space 8 in evaporation section I and a feed preheating section 11 located in gas heat exchange section II. Figure 1 only shows two conduits 2. The cooling device may have one single conduit 2, but it is preferred to use two or more conduits 2 which suitably run in parallel. Generally between 2 and 24 conduits 2 may run in parallel. The conduits 2 are suitably positioned around the vertical axis 3 of vessel 1 in parallel paths as ascending spirally shaped coils. Such spiral configuration could consist of one ascending cylinder of 1 to 10, preferably 2 to 8, spirally wound parallel conduits 2. A configuration with two ascending cylinders -an outer cylinder and an inner cylinder, each consisting of 1 to 10, preferably 2 to 8, spirally wound heat conduits 2- is also a suitable configuration. Likewise, the same configuration of one or two ascending cylinders of multiple, spirally ascending conduits 2 can be used in gas heat exchange section II. Figure 1 shows dotted lines in evaporation section I and gas heat exchange section II to illustrate how each conduit 2 runs spirally through vessel 1.

Also shown is an inlet 6 for fresh water. This inlet is preferably positioned such that the direction of the flow as it enters the vessel 1 enhances the circulation of water in a downward direction through a preferred downcomer 18. Alternative entry points for fresh water are, however, possible. For example, fresh water could also be added at an water inlet point in hot raw syngas inlet 4 (not shown). Downcomer 18 is preferably an open ended tubular part centrally positioned in water bath space 8 as shown. An upward direction of the water through an annular space 24 between downcomer 18 and inner wall of the vessel 1 will then result and circulation of water is created as shown by arrows in Figure 1. This circulation is beneficial for an effective heat transfer from the hot raw syngas in conduits 2 to the water. The conduits 2 are positioned in the water bath space 8 around such downcomer 18 in parallel paths as ascending spirally shaped coils as described above. In an alternative embodiment two or more, suitably between four and eight, downcomers 18 may be positioned in water bath space 8 around central axis 3. In this embodiment each downcomer may be surrounded by one or more spirally ascending conduits 2.

The water in water bath space 8 has a water level 21 and the wet saturated steam resulting from the evaporation of the water by absorbing the heat from the hot raw syngas is collected in the steam collection space 9 above water level 21. This steam collection space 9 is separated from dry steam collection space 23 by separation means 25. It was found advantageous to arrange the spirally ascending conduits 2 of the preheating section 11 in the dry steam collection space 23, thereby eliminating cooling (and hence heat loss) of the outside of second conduit 12 surrounding such conduits 2 through evaporation of water droplets, which are normally present in a wet steam space. Such cooling would go at the expense of the effectiveness of the preheating of the methane comprising gas in preheating section 11.

The separation means 25 as shown in Figure 1 comprises a support tube 19 which is centrally positioned inside the spirally ascending conduit 2 in gas heat exchange section II and through which the wet saturated steam flows upwardly. At its lower end the support tube 19 is connected to a ring-shaped gas-tight separation plate 20 which is located between steam collection space 9 and gas heat exchange section II and is fixed at its outer end to the inner wall of vessel 1. At its upper end the support tube 19 is fluidly connected with demister 22. In Figure 1 the demister 22 is arranged in the centre part of ring-shaped support plate 26, but this support plate 26 may also be replaced by other support means to fixate the demister 22 on top of support tube 19. The demister 22, in return, is fluidly connected with dry steam collection space 23 and is positioned above gas heat exchange section II. The dry steam is, accordingly, collected in dry steam collection space 23 and leaves vessel 1 via outlet 7.

Demister 22 can be any demister means suitable to remove liquid water droplets from the saturated steam collected in saturated steam collection space 9 and moving upward through support tube 19. For example, the demister 22 may be a demister mesh, a vane pack or a swirl tube cyclone deck.

The conduits 2 of the preheating section 11 are each surrounded by a second conduit 12 forming an annular space 13 between the conduit 2 and the second conduit 12. This annular space 13 is provided with an inlet 14 for cooling gas, which inlet 14 is fluidly connected to a vessel inlet 15 for the cooling gas. At its downstream end the annular space 13 is fluidly connected with an outlet 16 for the heated cooling gas. This outlet 16 is fluidly connected to vessel outlet 17 for the preheated cooling gas. When used in the process of the present invention, the cooling gas is a methane comprising gas. Figure 1 shows the cooling device for co-current flow of cooling gas and hot raw syngas in gas heat exchange section II.

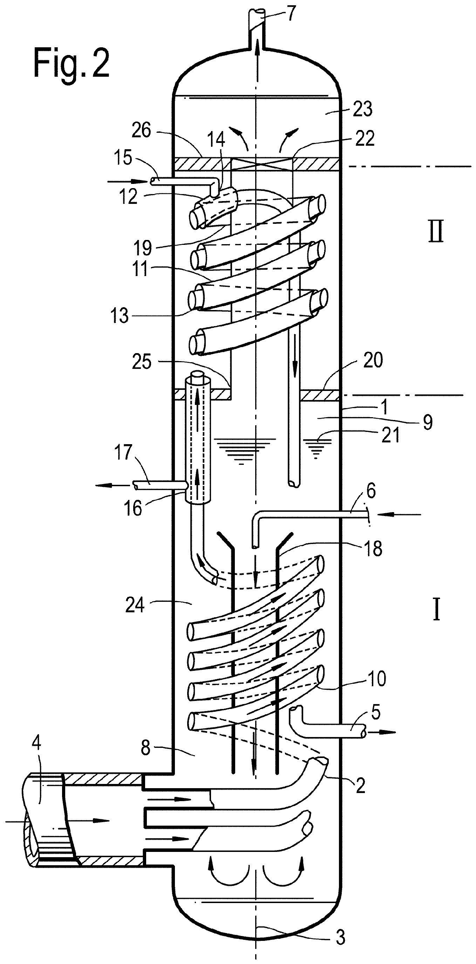

In such configuration it is important that the inlet 14 is located in water bath space 8 below the water level 21 to provide cooling to the hot raw syngas carrying conduit 2. In this way overheating of the walls of this conduit 2 can be avoided where the methane comprising cooling gas enters the annular space 13. For the counter-current flow embodiment shown in Figure 2 the outlet 16 of annular space 13 should be below water level 21 to provide cooling to the hot raw syngas carrying conduit 2 where the preheated methane comprising gas leaves the annular space 13.

In the transition from the evaporation section I to the gas heat exchange section II the multiple spirally ascending conduits 2 suitably run in a vertical direction through a common header or may individually run into gas heat exchange section II. If a common header is used, this common header is in fluid communication with annular space 13 surrounding the conduits 2 via inlet openings 14 (in co-current mode as shown in Figure 1) or outlet openings 16 (in counter-current mode as shown in Figure 2). In turn the common header is fluidly connected to either vessel inlet 15 (co-current mode) or vessel outlet 17 (counter-current mode). Such common header is preferably circular in a horizontal plane to accommodate efficiently the numerous conduits 2 which may run parallel in vessel 1. An example of a suitable configuration with a common header is described in WO-A-2007/131975.

The conduits 2 can be made of materials being resistant to metal dusting. Because of the corrosive nature of the syngas such metal dusting resistance is important. Suitable materials include chromium-molybdenum steel and -the more preferred- nickel based metal alloys. Example of a suitable nickel based metal alloys are Inconel® alloy 693 as obtainable from Special Metals Corporation, USA.

Figure 2 shows a cooling device where the methane comprising gas is preheated against the hot raw syngas in gas heat exchange section II in a counter-current mode. The difference with the cooling device as depicted in Figure 1 is that vessel inlet 15 and gas inlet 14 are positioned in the upper part of gas heat exchange section II, while gas outlet 16 and vessel outlet 17 are positioned in evaporation section I below water level 21. When in operation the methane comprising gas now enters the annular space 13 via vessel inlet 15 and inlet 14 in the upper part of gas heat exchange section II and flows downwardly through annular space 13, counter-currently to the flow of upwardly flowing hot raw syngas through conduits 2.

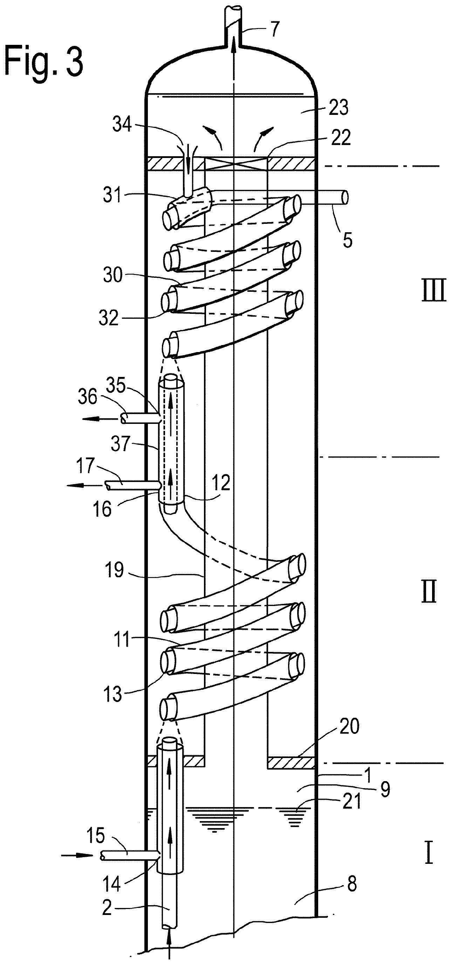

The cooling device of the present invention may be combined with a superheater section positioned above gas heat exchange II for further heating the saturated steam produced in evaporation section I to superheated steam. This embodiment is further illustrated in Figure 3.

Figure 3 shows the upper part of a cooling device according to Figure 1 (co-current flow of methane comprising gas and raw syngas in gas heat exchange section II) with a superheater section II positioned between gas heat exchange section II and dry steam collection space 23. Each spirally ascending conduit 2 leaving gas heat exchange section II further comprises a superheating section 30 located in the superheater section III and ascending around the central axis 3. Each such conduit 2 is surrounded in its superheating section 30 by a second conduit 31 forming an annular space 32 between said conduit 2 and said second conduit 31, said annular space 32 being provided with an inlet 34 for saturated steam fluidly connected to the saturated steam collection space 9 and an outlet 35 for superheated steam located at the opposite end of said annular space 32 and fluidly connected to a vessel outlet 36 for superheated steam in the wall of vessel 1. The outlet 5 for the cooled raw syngas is now positioned in superheater section III in the top part of vessel 1.

In order to ensure continuous cooling of the raw syngas flowing through conduit 2, the second conduit 12 surrounding the conduit 2 of the preheating section 11 is connected with second conduit 31 surrounding conduit 2 of superheating section 30. They are, however not fluidly connected: annular space 13 is separated from annular space 32 by gas-tight separation plate 37. By ensuring such continuous cooling of the hot raw syngas the wall temperature of the conduit 2 can be kept low enough to avoid metal dusting.

The device shown in Figure 3 shows a counter-current flow of saturated steam through annular space 32 and raw syngas through conduit 2 in superheating section 30. The superheater section II can also be designed such that saturated steam and raw syngas flow co-currently. Further details of how a superheater section can suitably be designed are described in WO-A-2007/131975.

The superheating section III may also be integrated with gas heat exchange section II. For example, spirally descending conduits 2 with second conduits 31 which form the superheating section III could be arranged inside the bundles(s) of spirally ascending conduits 2 surrounded by a second conduits 12 which form gas heat exchange section II. When in operation the syngas flows ascending in the gas heat exchange section II and descending in the superheating section III.

The cooling device may also be combined with a further evaporation section in which the raw syngas leaving gas heat exchange section II is passed back to a further evaporation section positioned in water bath space 8 to produce further saturated steam. Such second evaporation section is suitably located inside evaporating section 10 of spirally ascending conduit 2 in water bath space 8, wherein such second evaporation section comprises at least one spirally descending conduit fluidly connected at its upstream end to the spirally ascending conduit 2 leaving the gas heat exchange section II and at its downstream end with vessel outlet 5 for cooled gas. Alternatively, the second evaporation section comprises one or more straight heat exchange tubes fluidly connected at their upstream end to the spirally ascending conduit 2 leaving the gas heat exchange section II and at their downstream end with vessel outlet 5 for cooled gas, wherein at least one of these straight tubes is surrounded by a sheath tube comprising closing means at its upper end and being open at its lower end as further described in co-pending European patent application No. 14174590.1. By using such sheath tubes the heat exchange capacity of the heat exchange tube can be varied.

The heat exchange tubes in the second evaporation section may also comprise a combination of spirally descending conduits and straight conduits with sheath tubes around it or may comprise heat exchange tubes consisting of a spirally descending section fluidly connected with a straight section surrounded by a sheath tube as described above.

### Examples

The invention is further illustrated by the following examples. The examples are calculated examples using an integrated calculation model which includes detailed heat transfer algorithms and gas properties.

### Example 1

Hot raw syngas having a temperature of 1350 °C and a pressure of 6 MPa is fed into a cooling device comprising an evaporation section and a gas heat exchange section with counter-current flow of syngas and methane comprising gas.

The temperature of the cooled raw syngas leaving the cooling device is 400 °C at a pressure of 5.4 MPa, whilst the preheated methane-comprising gas has a temperature of 525 °C with the methane-comprising gas entering the cooling device at a temperature of 273 °C. In the evaporation section saturated steam is produced having a temperature of 293 °C.

### Example 2

Example 1 was repeated except that the cooling device now also contains a superheater section downstream of the gas heat exchange section and that the gas heat exchange section has a co-current flow of syngas and methane comprising gas.

Saturated steam produced in the evaporation section is passed through the superheater section to produce superheated steam of 410 °C. The temperature of the cooled raw syngas leaving the cooling device is 400 °C at a pressure of 5.2 MPa, whilst the preheated methane-comprising gas has a temperature of 525 °C with the methane-comprising gas entering the cooling device at a temperature of 385 °C.

### Example 3

Example 1 was repeated except that the cooling device now also contains a second evaporation section downstream of the gas heat exchange section and that the gas heat exchange section has a co-current flow of syngas and methane comprising gas.

The temperature of the cooled raw syngas leaving the cooling device is 400 °C at a pressure of 5.8 MPa, whilst the preheated methane-comprising gas has a temperature of 480 °C with the methane-comprising gas entering the cooling device at a temperature of 385 °C. The combined saturated steam from the first and second evaporation section has a temperature of 293 °C.

## Claims

1. Process for the preparation of a syngas comprising hydrogen and carbon monoxide comprising the steps of:
(a) reacting a preheated methane comprising gas with an oxidising gas to obtain a hot raw syngas comprising carbon monoxide and hydrogen;
(b) cooling the hot raw syngas resulting from step (a) to obtain the syngas by indirect heat exchange against water to produce saturated steam;
(c) further cooling the raw syngas obtained in step (b) by indirect heat exchange against a methane comprising gas to obtain a cooled raw syngas and the preheated methane comprising gas for use in step (a),
wherein:
(i) steps (b) and (c) take place in a single cooling device for combined indirect heat exchange against water and against the methane comprising gas; and
(ii) the preheated methane comprising gas obtained in step (c) has a temperature between 400 and 650 °C.

2. Process according to claim 1, wherein the methane comprising gas used in step (c) is first preheated to a temperature of up to 400 °C by indirect heat exchange against the cooled raw syngas leaving the single cooling device to obtain a further cooled raw syngas.

3. Process according to claim 2, wherein the water used in step (b) is first preheated by indirect heat exchange against the further cooled raw syngas.

4. Process according to any one of claims 1-3, wherein the process comprises the further step of:
(d) further cooling the cooled raw syngas obtained in step (c) by indirect heat exchange against water in the single cooling device to obtain further saturated steam and further cooled raw syngas.

5. Process according to any one of claims 1-3, wherein the process comprises the further step of:
(d') further cooling the cooled raw syngas obtained in step (c) by indirect heat exchange against the saturated steam obtained in step (a) in the single cooling device to obtain superheated steam and further cooled syngas.

6. Cooling device for cooling a hot raw syngas by indirect heat exchange against water in an evaporation section (I) and against a cooling gas in gas heat exchange section (II), which device comprises a vertically oriented vessel (1) comprising at least one spirally ascending conduit (2), an inlet (4) for the hot raw syngas fluidly connected to the upstream end of each conduit (2) for upward passage of the hot raw syngas through each spirally ascending conduit (2), an outlet (5) for cooled raw syngas fluidly connected to the downstream end of each conduit (2), an inlet (6) for fresh water and an outlet (7) for dry steam, a water bath space (8) in the lower part of the vessel (1), a saturated steam collection space (9) above said water bath space (8) and a dry steam collection space (23) above said saturated steam collection space (9) in the upper part of vessel (1), wherein
(i) the evaporation section (I) is located in the lower part of vessel (1) and the gas heat exchange section (II) is located immediately above the evaporation section (I) in vessel (1),
(ii) each spirally ascending conduit (2) comprises an evaporating section (10) located in the water bath space (8) in evaporation section (I) and a preheating section (11) located in gas heat exchange section (II),
(iii) each conduit (2) of the preheating section (11) is surrounded by a second conduit (12) forming an annular space (13) between said conduit (2) and said second conduit (12),
(iv) the annular space (13) is provided with an inlet (14) for cooling gas fluidly connected to an inlet (15) for cooling gas and an outlet (16) for heated cooling gas located at the opposite end of said annular space (13) which outlet (16) is fluidly connected to outlet (17) for the heated cooling gas,
(v) the inlet (14) or outlet (16) is located in water bath space (8) below the water level (21), and
(vi) a separation means (25) is arranged inside vessel (1) between steam collection space (9) and dry steam collection space (23).

7. Cooling device according to claim 6, wherein
(vii) separation means (25) comprises a support tube (19) centrally positioned inside the spirally ascending conduit (2) of the preheating section (11) and connected at its lower end to a ring-shaped separation plate (20) and at its upper end to a demister (22),
(viii) the separation plate (20) is located between steam collection space (9) and gas heat exchange section (II) and is fixed at its outer end to the inner wall of vessel (1),
(ix) the demister (22) is fluidly connected with dry steam collection space (23) and is positioned above gas heat exchange section (II).

8. Cooling device according to claim 7 or 8, wherein the evaporation section (I) comprises a centrally positioned downcomer (18) in water bath space (8).

9. Cooling device according to any one of claims 6-8 further comprising a superheater section (III) positioned between gas heat exchange section (II) and dry steam collection space (23) in vessel (1), wherein each spirally ascending conduit (2) further comprises a superheating section (30) located in the superheater section (III) and ascending around the central axis (3) and is surrounded by a second conduit (31) forming an annular space (32) between said conduit (2) and said second conduit (31), said annular space (32) being provided with an inlet (34) for saturated steam fluidly connected to the saturated steam collection space (9) and an outlet (35) for superheated steam located at the opposite end of said annular space (32) and fluidly connected to an outlet (36) for superheated steam in the wall of vessel (1).

## Patentansprüche

1. Verfahren zur Herstellung eines Synthesegases, das Wasserstoff und Kohlenmonoxid umfasst, umfassend die Schritte von:
(a) Umsetzen eines vorgewärmten Methan-umfassenden Gases mit einem oxidierenden Gas, um ein heißes Rohsynthesegas zu erhalten, das Kohlenmonoxid und Wasserstoff umfasst;
(b) Kühlen des heißen rohen Synthesegases, das sich aus Schritt (a) ergibt, um das Synthesegas durch indirekten Wärmeaustausch gegen Wasser zu erhalten, um Sattdampf zu erzeugen;
(c) weiteres Kühlen des in Schritt (b) erhaltenen Rohsynthesegases durch indirekten Wärmeaustausch gegen ein Methan-umfassendes Gas, um ein gekühltes Rohsynthesegas zu erhalten, und des vorgewärmten Methan-umfassenden Gases zur Verwendung in Schritt (a),
wobei:
(i) die Schritte (b) und (c) in einer einzigen Kühlvorrichtung zum kombinierten indirekten Wärmeaustausch gegen Wasser und gegen das Methan-umfassende Gas stattfinden; und
(ii) das vorgewärmte Methan-umfassende Gas, das in Schritt (c) erhalten wurde, eine Temperatur zwischen 400 und 650 °C aufweist.

2. Verfahren nach Anspruch 1, wobei das Methan-umfassende Gas, das in Schritt (c) verwendet wird, zunächst auf eine Temperatur von bis zu 400 °C durch indirekten Wärmeaustausch gegen das gekühlte Rohsynthesegas vorgewärmt wird, das die einzelne Kühlvorrichtung verlässt, um ein weiteres gekühltes Rohsynthesegas zu erhalten.

3. Verfahren nach Anspruch 2, wobei das in Schritt (b) verwendete Wasser zunächst durch indirekten Wärmeaustausch gegen das weiter gekühlte Rohsynthesegas vorgewärmt wird.

4. Verfahren nach einem der Ansprüche 1-3, wobei das Verfahren den weiteren Schritt umfasst von:
(d) weiterem Kühlen des in Schritt (c) erhaltenen gekühlten Rohsynthesegases durch indirekten Wärmeaustausch gegen Wasser in der einzelnen Kühlvorrichtung, um weiteren Sattdampf und weiteres gekühltes Rohsynthesegas zu erhalten.

5. Verfahren nach einem der Ansprüche 1-3, wobei das Verfahren den weiteren Schritt umfasst von:
(d') weiterem Kühlen des in Schritt (c) erhaltenen gekühlten Rohsynthesegases durch indirekten Wärmeaustausch gegen den in Schritt (c) erhaltenen Sattdampf in der einzelnen Kühlvorrichtung, um überhitzten Dampf und weiter gekühltes Synthesegas zu erhalten.

6. Kühlvorrichtung zum Kühlen eines heißen Rohsynthesegases durch indirekten Wärmeaustausch gegen Wasser in einem Verdampfungsabschnitt (I) und gegen ein Kühlgas im Gaswärmeaustauschabschnitt (II), wobei die Vorrichtung Folgendes umfasst:
einen vertikal ausgerichteten Behälter (1) mit mindestens einer spiralförmig ansteigenden Leitung (2),
einen Einlass (4) für das heiße Rohgas, der mit dem stromaufwärts gelegenen Ende jeder Leitung (2) verbunden ist, zum Aufwärtsdurchgang des heißen Rohsynthesegases durch jede spiralförmig ansteigende Leitung (2),
einen Auslass (5) für gekühltes Rohsynthesegas, der mit dem stromabwärts gelegenen Ende jeder Leitung (2) fluidisch verbunden ist,
einen Einlass (6) für Frischwasser und
einen Auslass (7) für Trockendampf,
einen Wasserbadraum (8) im unteren Teil des Behälters (1),
einen Sattdampfsammelraum (9) über dem Wasserbadraum (8) und
einen Trockendampfsammelraum (23) über dem Sattdampfsammraum (9) im oberen Teil des Behälters (1), wobei
(i) der Verdampfungsabschnitt (I) im unteren Teil des Behälters (1) und der Gaswärmetauscherabschnitt (II) unmittelbar über dem Verdampfungsabschnitt (I) im Behälter (1) angeordnet ist,
(ii) jede spiralförmig aufsteigende Leitung (2) einen Verdampfungsabschnitt (10) umfasst, der sich im Wasserbadraum (8) im Verdampfungsabschnitt (I) befindet, und einen Vorwärmabschnitt (11), der sich im Gaswärmetauscherabschnitt (II) befindet,
(iii) jede Leitung (2) des Vorwärmabschnitts (11) von einer zweiten Leitung (12) umgeben ist, die einen ringförmigen Raum (13) zwischen der Leitung (2) und der zweiten Leitung (12) bildet,
(iv) der Ringraum (13) mit einem Einlass (14) zum Kühlen von Gas, der mit einem Einlass (15) für Kühlgas fluidisch verbunden ist, und einem Auslass (16) für erwärmtes Kühlgas, der am gegenüberliegenden Ende des Ringraums (13) angeordnet ist, bereitgestellt ist, wobei der Auslass (16) fluidisch mit dem Auslass (17) für das erwärmte Kühlgas verbunden ist,
(v) der Einlass (14) oder Auslass (16) sich im Wasserbadraum (8) unterhalb des Wasserspiegels (21) befindet, und
(vi) ein Trennmittel (25) innerhalb des Behälters (1) zwischen dem Dampfsammelraum (9) und dem Trockendampfsammelraum (23) angeordnet ist.

7. Kühlvorrichtung nach Anspruch 6, wobei (vii) Trennmittel (25), die ein Stützrohr (19) umfassen, das zentral innerhalb der spiralförmig ansteigenden Leitung (2) des Vorheizabschnitts (11) angeordnet und an seinem unteren Ende mit einer ringförmigen Trennscheibe (20) und an seinem oberen Ende mit einem Tropfenabscheider (22) verbunden ist,
(viii) die Trennscheibe (20) zwischen Dampfsammelraum (9) und Gaswärmeaustauscherabschnitt (II) angeordnet ist und an ihrem äußeren Ende an der Innenwand des Behälters (1) befestigt ist,
(ix) der Tropfenabscheider (22) fluidisch mit dem Trockendampfsammelraum (23) verbunden und über dem Gaswärmetauscherabschnitt (II) angeordnet ist.

8. Kühlvorrichtung nach Anspruch 7 oder 8, wobei der Verdampfungsabschnitt (I) ein zentral angeordnetes Fallrohr (18) im Wasserbadraum (8) umfasst.

9. Kühlvorrichtung nach einem der Ansprüche 6 bis 8, ferner umfassend einen Überhitzerabschnitt (III), der zwischen dem Gaswärmeaustauscherabschnitt (II) und dem Trockendampfsammelraum (23) im Behälter (1) angeordnet ist, wobei jede spiralförmig ansteigende Leitung (2) ferner einen Überhitzungsabschnitt (30) umfasst, der sich im Überhitzerabschnitt (III) befindet und um die Mittelachse (3) ansteigt und von einer zweiten Leitung (31) umgeben ist, die einen Ringraum (32) zwischen der Leitung (2) und der zweiten Leitung (31) bildet, wobei der ringförmige Raum (32) mit einem Einlass (34) für Sattdampf, der mit dem Sattdampfsammelraum (9) fluidisch verbunden ist, und einem Auslass (35) für Heißdampf bereitgestellt ist, der am gegenüberliegenden Ende des ringförmigen Raums (32) angeordnet und fluidisch mit einem Auslass (36) für Heißdampf in der Wand des Behälters (1) verbunden ist.

## Revendications

1. Procédé de préparation d'un gaz de synthèse comprenant de l'hydrogène et du monoxyde de carbone, comprenant les étapes consistant à :
(a) faire réagir un gaz comprenant du méthane préchauffé avec un gaz oxydant pour obtenir un gaz de synthèse brut chaud comprenant du monoxyde de carbone et de l'hydrogène ;
(b) refroidir le gaz de synthèse brut chaud résultant de l'étape (a) pour obtenir le gaz de synthèse par échange de chaleur indirect avec de l'eau pour produire de la vapeur saturée ;
(c) refroidir davantage le gaz de synthèse brut obtenu à l'étape (b) par échange de chaleur indirect avec un gaz comprenant du méthane afin d'obtenir un gaz de synthèse brut refroidi et le gaz comprenant du méthane préchauffé destiné à être utilisé à l'étape (a),
où :
(i) les étapes (b) et (c) ont lieu dans un seul dispositif de refroidissement pour un échange de chaleur indirect combiné avec de l'eau et le gaz comprenant du méthane ; et
(ii) le gaz comprenant du méthane préchauffé obtenu à l'étape (c) a une température comprise entre 400 et 650°C.

2. Procédé selon la revendication 1, dans lequel le gaz comprenant du méthane utilisé à l'étape (c) est préalablement préchauffé à une température allant jusqu'à 400°C par échange de chaleur indirect avec le gaz de synthèse brut refroidi quittant le dispositif de refroidissement unique pour obtenir un gaz de synthèse brut davantage refroidi.

3. Procédé selon la revendication 2, dans lequel l'eau utilisée à l'étape (b) est préalablement préchauffée par échange de chaleur indirect avec le gaz de synthèse brut davantage refroidi.

4. Procédé selon l'une quelconque des revendications 1 à 3, dans lequel le procédé comprend l'étape supplémentaire consistant à :
(d) refroidir davantage le gaz de synthèse brut refroidi obtenu à l'étape (c) par échange de chaleur indirect avec de l'eau dans le dispositif de refroidissement unique pour obtenir davantage de vapeur saturée et un gaz de synthèse brut davantage refroidi.

5. Procédé selon l'une quelconque des revendications 1 à 3, dans lequel le procédé comprend l'étape supplémentaire consistant à :
(d') refroidir davantage le gaz de synthèse brut refroidi obtenu à l'étape (c) par échange de chaleur indirect avec de la vapeur saturée obtenue à l'étape (a) dans le dispositif de refroidissement unique pour obtenir de la vapeur surchauffée et un gaz de synthèse davantage refroidi.

6. Dispositif de refroidissement destiné à refroidir un gaz de synthèse brut chaud par échange de chaleur indirect avec de l'eau dans une section d'évaporation (I) et avec un gaz de refroidissement dans une section d'échange de chaleur de gaz (II), lequel dispositif comprend une cuve (1) à orientation verticale comprenant au moins un conduit ascendant en spirale (2), une entrée (4) pour le gaz de synthèse brut chaud reliée de manière fluidique à l'extrémité amont de chaque conduit (2) pour permettre le passage vers le haut du gaz de synthèse brut chaud à travers chaque conduit ascendant en spirale (2), une sortie (5) pour le gaz de synthèse brut refroidi, reliée de manière fluidique à l'extrémité aval de chaque conduit (2), une entrée (6) pour l'eau froide et une sortie (7) pour la vapeur sèche, un espace de bain-marie (8) dans la partie inférieure de la cuve (1), un espace de collecte de vapeur saturée (9) au-dessus dudit espace de bain-marie (8) et un espace de collecte de vapeur sèche (23) au-dessus dudit espace de collecte de vapeur saturée (9) dans la partie supérieure de la cuve (1),
(i) la section d'évaporation (I) étant située dans la partie inférieure de la cuve (1) et la section d'échange de chaleur de gaz (II) étant située immédiatement au-dessus de la section d'évaporation (I) dans la cuve (1),
(ii) chaque conduit ascendant en spirale (2) comprenant une section d'évaporation (10) située dans l'espace de bain-marie (8) dans la section d'évaporation (I) et une section de préchauffage (11) située dans la section d'échange de chaleur de gaz (II),
(iii) chaque conduit (2) de la section de préchauffage (11) étant entouré d'un second conduit (12) formant un espace annulaire (13) entre ledit conduit (2) et ledit second conduit (12),
(iv) l'espace annulaire (13) étant pourvu d'une entrée (14) pour le gaz de refroidissement, reliée de manière fluidique à une entrée (15) pour le gaz de refroidissement, et d'une sortie (16) pour le gaz de refroidissement chauffé, située à l'extrémité opposée dudit espace annulaire (13) laquelle sortie (16) est reliée de manière fluidique à la sortie (17) pour le gaz de refroidissement chauffé,
(v) l'entrée (14) ou la sortie (16) étant située dans un espace de bain-marie (8) en dessous du niveau de l'eau (21), et
(vi) un moyen de séparation (25) étant agencé à l'intérieur de la cuve (1) entre l'espace de collecte de vapeur (9) et l'espace de collecte de vapeur sèche (23) .

7. Dispositif de refroidissement selon la revendication 6, dans lequel
(vii) le moyen de séparation (25) comprend un tube de support (19) positionné centralement à l'intérieur du conduit ascendant en spirale (2) de la section de préchauffage (11) et relié à son extrémité inférieure à une plaque de séparation en forme d'anneau (20) et à son extrémité supérieure à un dispositif de désembuage (22),
(viii) la plaque de séparation (20) est située entre l'espace de collecte de vapeur (9) et la section d'échange de chaleur de gaz (II) et est fixée à son extrémité extérieure à la paroi intérieure de la cuve (1),
(ix) le dispositif de désembuage (22) est relié de manière fluidique à un espace de collecte de vapeur sèche (23) et est positionné au-dessus de la section d'échange de chaleur de gaz (II).

8. Dispositif de refroidissement selon la revendication 7 ou 8, dans lequel la section d'évaporation (I) comprend un tuyau de descente (18) positionné au centre dans l'espace de bain-marie (8).

9. Dispositif de refroidissement selon l'une quelconque des revendications 6 à 8, comprenant en outre une section de surchauffeur (III) placée entre la section d'échange de chaleur de gaz (II) et l'espace de collecte de vapeur sèche (23) dans la cuve (1), chaque conduit ascendant en spirale (2) comprenant en outre une section de surchauffage (30) située dans la section de surchauffeur (III) et montant autour de l'axe central (3), et chaque conduit étant entouré par un second conduit (31) formant un espace annulaire (32) entre ledit conduit (2) et ledit second conduit (31), ledit espace annulaire (32) étant pourvu d'une entrée (34) pour la vapeur saturée, reliée de manière fluidique à l'espace de collecte de vapeur saturée (9), et d'une sortie (35) pour la vapeur surchauffée située à l'extrémité opposée dudit espace annulaire (32) et reliée de manière fluidique à une sortie (36) pour la vapeur surchauffée dans la paroi de 1
